# EUROPEAN PATENT SPECIFICATION

(11) **EP 2 746 978 B1**
(45) Date of publication and mention of the grant of the patent: **01.07.2020**
(21) Application number: 11865533.1
(22) Date of filing: 24.10.2011
(51) Int. Cl.: G06F 21/12, H04L 29/06

(54) **LICENSE CONTROL METHOD AND SYSTEM THEREOF**
LIZENZSTEUERVERFAHREN UND SYSTEM DAFÜR
PROCÉDÉ DE CONTRÔLE DE LICENCE ET SYSTÈME CONNEXE

(30) Priority: 19.08.2011 CN 201110239160
(43) Date of publication of application: 25.06.2014
(73) Proprietor: ZTE Corporation, Shenzhen, Guangdong 518057 (CN)
(72) Inventor: LIU, Qiang, Shenzhen Guangdong 518057 (CN)
(74) Representative: Gevers Patents
(86) International application number: PCT/CN2011/081191
(87) International publication number: WO 2012/155456

(56) References cited:
- EP-B1- 1 287 416
- WO-A2-2006/138177
- CN-A- 101 256 607
- CN-A- 101 710 377
- US-A1- 2007 261 105
- US-A1- 2010 088 413
- US-A1- 2010 293 619

## Description

### Technical Field

The present document relates to the field of software license management and control, and in particular, to a license control method and system.

### Background of the Related Art

With the rapid development of software industry, people's protection consciousness of software intellectual property is also growing, especially for large commercial software, and a complete set of intellectual property right protection mechanisms is needed. The currently common practice is to protect the software intellectual property right by means of authorization through a license file, and in this way, a lot of software can be effectively prevented from being pirated and used, the interests of the author of the software is protected while maintaining the legitimate rights of the legal buyer.

Current license control method needs to expect and specify an authorization value of each license object, and each license object system performs authentication determination based on the corresponding authorization value. However, during the practical use, the amount of service of the license objects may be changed (increased or decreased), and if it increases and exceeds an expected authorization value, it needs to make the license file again, and if it is less than the expected authorization value, redundant authorization values can not be used by other license object systems, which results in waste.

In conclusion, in the existing license management techniques, there also exist the following technical problems:
1. Licenses are distributed among various small software systems, which results in the number of license files being large, the management and control methods being non-uniform, the update of the license files being frequent, and the maintenance human input being large;
2. It needs to restart the system to update the license file; and
3. The license consumption and control of the application system are mixed together, which leads to a complex logic.

US 2010/0293619 A1 provides an information processing apparatus that acquires a license from a license server and installs application software permitted by the license and executable by a virtual server that operates on the information processing apparatus determines a license type of the application software according to whether the license type is in a unit of the information processing apparatus unit or in a unit of the virtual server, transmits the license type to the license server, and acquires a license to execute the application software from the license server.

### Summary of the Invention

The technical problem to be solved by the present document is to provide a license control method and system, to implement dynamic license sharing.

The features of the method, system and apparatus according to the present invention are defined in the independent claims, and the preferable features according to the present invention are defined in the dependent claims.

In order to solve the above technical problem, the present document provides a license control method, comprising:
a license control system configuring a shared license value of a license sharing group, wherein, the license sharing group includes one or more license object systems;
a license object system initiating a license authentication request to the license control system according to a service operation initiated by a user; and
the license control system determining whether the license authentication request of the license object system is legal according to the shared license value of the license sharing group where the license object system is located, and returning a license authentication result to the license object.

Preferably, the license control system stores a shared license file configured for the license sharing group, wherein, the shared license file includes a configured dynamic sharing rule;
the configured dynamic sharing rule includes the following information: a license function item, encoding information of each license object system in the license sharing group, and a shared license value.

Preferably, the license control system determines whether the license authentication request of the license object system is legal according to a dynamic sharing rule of the shared license file in accordance with the following mode when receiving the license authentication request:
the license control system determining whether a sum of a license consumption value applied by the license object system included in the license authentication request and recorded license consumption values of other license object systems in the license sharing group exceeds the shared license value of the license function item, if not exceeding, determining that the license authentication request is legal and returning a license authentication success result, and if exceeding, determining that the license authentication request is illegal, and returning a license authentication failure result.

Preferably, the method further comprises:
the license control system storing and updating a license authorization real-time consumption record of the license sharing group, wherein, the license authorization real-time consumption record includes the license consumption value of each license object systems in the license sharing group.

The present document further provides a license control system, comprising license object systems and a license authorization control module, wherein the license object system further comprises a license application agent module, wherein,
the license application agent module is configured to initiate a license authentication request to the license authorization control module according to a service operation initiated by a user, wherein, the license authentication request includes a license consumption value applied by the license object system; and
the license authorization control module is configured to store authorization information of the license object system, and when receiving the license authentication request, determine whether the license authentication request of the license object system is legal according to the stored license authorization information, and return a license authentication result to the license object system.

Preferably, the license authorization information stored in the license authorization control module includes encoding information of the license object system and a corresponding license value;
the license authorization control module is configured to determine whether the license authentication request of the license object system is legal according to the stored license authorization information in accordance with the following mode: when receiving the license authentication request, determining whether the license consumption value applied by the license object system exceeds the license value corresponding to the license object system, if not exceeding, determining that the license authentication request is legal and returning a license authentication success result, and if exceeding, determining that the license authentication request is illegal, and returning a license authentication failure result.

The present document further provides a license control system, comprising license object systems and a license control server-side, wherein the license control server-side further comprises a license authorization control module, wherein,
the license object system is configured to initiate a license authentication request to the license authorization control module according to a service operation initiated by a user, and receive a license authentication result returned by the license authorization control module; and
the license authorization control module is configured to configure a shared license value of a license sharing group, wherein, the license sharing group includes one or more license object systems; and when receiving a license authentication request initiated by the license object system, determine whether the license authentication request of the license object system is legal according to the shared license value of the license sharing group where the license object system is located, and return a license authentication result to the license object.

Preferably, the license authorization control module is configured to store and manage a shared license file configured by the license sharing group, wherein, the shared license file includes a configured dynamic sharing rule;
wherein, the configured dynamic sharing rule includes the following information: a license function item, encoding information of each license object system in the license sharing group, and a shared license value.

Preferably, the license authorization control module is further configured to store and update a license authorization real-time consumption record of the license sharing group according to a license consumption value applied by the license object system included in the license authentication request, wherein, the license authorization real-time consumption record includes the license consumption value of each license object system in the license sharing group.

Preferably, the license object system further comprises a service module and a license application agent module,
the service module is configured to initiate a request to the license application agent module when a user initiates a service operation through the service module;
the license application agent module is configured to transmit the license authentication request to the license authorization control module according to the request of the service module, and include the applied license consumption value in the license authentication request; and receive a license authentication result of the license authorization control module and distribute the license authentication result to a corresponding service module; and
the license authorization control module is configured to determine whether the license authentication request of the license object system is legal according to a dynamic sharing rule of the shared license file in accordance with the following mode when receiving the license authentication request: determining whether a sum of the license consumption value applied by the license object system included in the license authentication request and the recorded license consumption values of other license object systems in the license sharing group exceeds the shared license value of the license function item, if not exceeding, determining that the license authentication request is legal and returning a license authentication success result, and if exceeding, determining that the license authentication request is illegal, and returning a license authentication failure result.

Preferably, the system further comprises a client communicating with the license control server-side, wherein, the client further includes one or more of the following modules:
a license file import interface, configured to provide a shared license file import entrance;
a license legality check module, configured to check legality of the shared license file;
a license content presentation module, configured to obtain a content of the shared license file from the license control server-side and present the content; and
a license consumption aggregation interface, configured to obtain a license authorization real-time consumption condition from the license control server-side and present the license authorization real-time consumption condition.

The present document further provides a license authorization control apparatus, comprising a configuration unit, a transceiver unit and a determination unit, wherein,
the configuration unit is configured to configure a shared license value of a license sharing group, wherein, the license sharing group includes one or more license object systems;
the transceiver unit is configured to receive a license authentication request initiated by the license object system to transmit to the determination unit; and return a license authentication result transmitted from the determination unit to the license object system; and
the determination unit is configured to determine whether the license authentication request of the license object system is legal according to the shared license value of the license sharing group where the license object system is located when receiving the license authentication request; and transmit the license authentication result to the transceiver unit.

Preferably, the above license authorization control apparatus further comprises a storage and management unit, configured to store and manage a shared license file configured by the license sharing group, wherein, the shared license file includes a configured dynamic sharing rule;
wherein, the configured dynamic sharing rule includes the following information: a license function item, encoding information of each license object system in the license sharing group, and a shared license value.

Preferably, in the above license authorization control apparatus, the storage and management unit is further configured to store and update a license authorization real-time consumption record of the license sharing group according to a license consumption value applied by the license object system included in the license authentication request, wherein, the license authorization real-time consumption record includes the license consumption value of each license object system in the license sharing group.

Preferably, in the license authorization control apparatus, the determination unit is configured to determine whether the license authentication request of the license object system is legal according to a dynamic sharing rule of the shared license file in accordance with the following mode when receiving the license authentication request: determining whether a sum of the license consumption value applied by the license object system included in the license authentication request and recorded license consumption values of other license object systems in the license sharing group exceeds the shared license value of the license function item, if not exceeding, determining that the license authentication request is legal and returning a license authentication success result, and if exceeding, determining that the license authentication request is illegal, and returning a license authentication failure result.

The above license control method and system divide the license object system into one or more sharing groups according to the service planning by formulating the sharing rule, and the license object systems in the same sharing group can share a license authorization value in the sharing group, thus implementing dynamic license sharing, and the license resources released by any license object system therein can be dynamically used by other license object systems, which avoids the waste of license resources; and as long as the license consumption value of the whole sharing group does not exceed the total limitation, there is no need to make a license file again, which reduces the operations when the license file is updated. Compared to the related art, the above method, system and apparatus enable the dynamic sharing of multiple application systems, and have characteristics of safety, high efficiency, and separation of license consumption from management, and the advantages are obvious especially in a telecommunication network management system.

### Brief Description of Drawings

The accompanying drawings described herein are used to provide a better understanding of the present document and constitute a part of the application, and the exemplary embodiments of the present document and the descriptions thereof are used to explain the present document and do not constitute an improper limitation of the present document. In the accompanying drawings:
Fig. 1 is a constitutive diagram of a license control system according to an embodiment of the present document;
Fig. 2 is a process flowchart of a license control method according to an embodiment of the present document; and
Fig. 3 is a structural diagram of a license authorization control apparatus according to an embodiment of the present document.

### Preferred Embodiments of the Invention

The embodiments of the present document will be described in detail in conjunction with accompanying drawings hereinafter. It should be illustrated that, without conflict, the embodiments in the application and the features in the embodiments can be combined with each other randomly.

In order to implement the separation of license consumption from control, the present embodiment provides a license control method, which specifically uses the following technical schemes:
the license object system initiating a license authentication request to the license control system according to a service operation initiated by a user, wherein, the license authentication request includes an applied license consumption value; and
when receiving the license authentication request, the license control system determining whether the license authentication request of the license object system is legal according to the stored license authorization information, and returning a license authentication result to the license object system.

Wherein, the license authorization information stored in the license control system includes encoding information of the license object system and a corresponding license value;
when receiving the license authentication request, the license control system determines whether the license consumption value applied by the license object system exceeds the license value corresponding to the license object system, if not exceeding, determines that the license authentication request is legal and returns a license authentication success result, and if exceeding, determines that the license authentication request is illegal, and returns a license authentication failure result.

Correspondingly, the embodiment further provides a license control system, primarily comprising license object systems and a license authorization control module, wherein the license object system comprises a license application agent module, wherein,
the license application agent module is configured to initiate a license authentication request to the license authorization control module according to a service operation initiated by a user, wherein, the license authentication request includes a license consumption value applied by the license object system; and
the license authorization control module is configured to store authorization information of the license object system, and when receiving the license authentication request, determine whether the license authentication request of the license object system is legal according to the stored license authorization information, and return a license authentication result to the license object system.

Preferably, the license authorization information stored in the license authorization control module includes encoding information of the license object system and a corresponding license value;
the license authorization control module is configured to determine whether the license authentication request of the license object system is legal according to the stored license authorization information in accordance with the following mode: when receiving the license authentication request, determining whether the license consumption value applied by the license object system exceeds the license value corresponding to the license object system, if not exceeding, determining that the license authentication request is legal and returning a license authentication success result, and if exceeding, determining that the license authentication request is illegal, and returning a license authentication failure result.

In addition, in order to implement dynamic license sharing of multiple object systems, the present embodiment provides a license control method, specifically using the following technical schemes:
a license control system configuring a shared license value of a license sharing group, wherein, the license sharing group includes one or more license object systems;
a license object system initiating a license authentication request to the license control system according to a service operation initiated by a user; and
the license control system determining whether the license authentication request of the license object system is legal according to the shared license value of the license sharing group where the license object system is located, and returning a license authentication result to the license object system.

Specifically, the license control system stores a shared license file configured for the license sharing group, wherein, the shared license file includes a configured dynamic sharing rule;
the configured dynamic sharing rule includes the following information: a license function item, encoding information of each license object system in the license sharing group, and a shared license value.

Preferably, the license control system determines whether the license authentication request of the license object system is legal according to a dynamic sharing rule of the shared license file in accordance with the following mode when receiving the license authentication request:
the license control system determining whether a sum of the license consumption value applied by the license object system included in the license authentication request and the recorded license consumption values of other license object systems in the license sharing group exceeds the shared license value of the license function item, if not exceeding, determining that the license authentication request is legal and returning a license authentication success result, and if exceeding, determining that the license authentication request is illegal, and returning a license authentication failure result.

In addition, the method further comprises: the license control system storing and updating a license authorization real-time consumption record of the license sharing group, wherein, the license authorization real-time consumption record includes the license consumption value of each license object system in the license sharing group.

When determining the legality of the license authentication request, the license control system can make determination in conjunction with the current real-time consumption condition of the license sharing group.

Preferably, the method further comprises registering the accessed license object system: when the license object system starts, it needs to register with the license control system, and a secrete key (which is preset) needs to be checked during registration, and the registration will be successful only for the license object system with the correct secrete key, otherwise, the registration can not be implemented; and only the license object system which registers successfully can apply for license authentication.

The license control system according to the present embodiment primarily comprises the following logical constitutive parts:
a license control client, which is responsible for providing a license file import entrance; checking the legality of the license file; presenting the content of the license file; and obtaining a license file consumption condition from the license control server-side in real time;
a license control server-side, which is responsible for verifying and registering the legality of the controlled object which accesses the system; and responding to the license authentication request of the controlled object according to a dynamic sharing rule; and carrying on statistics on the license consumption condition in real time and notifying it to the license control client side; and
a license application agent module, which is deployed in the software of the controlled object, and is responsible for encrypting the license authentication request and then transferring it to the license control server-side; receiving the license authentication result message of the license control server-side, and is responsible for decrypting the message and then distributing it to an application module.

Based on the above license control system, the license control procedure according to the embodiment of the present document mainly comprises the following steps.

In the first step, the license shared groups are built according to 1) the current networking condition of the user, 2) the license entries in the contract and 3) the sharing rule of the license object system (also referred to as controlled objects), and a corresponding shared license file is made for each license shared group, wherein, the file contains the encoding information of the controlled object in addition to the authorization information of a specific license function item, and then the license file is distributed to the user of the software.

In the second step, the license file is imported into the control system through a license file import entrance of the license control client.

In step three, when the system starts, the service module of the controlled object registers with the license control server-side through the license application agent module, and the system encoding information of the controlled object, i.e., secrete key information (which is preset) needs to be carried to initiate a registration request according to a preset format during registration; and the registration will be successful only for the controlled object with the correct secrete key information.

In step four, after the registration is successful, when the user performs a related service operation, it will triggers the license authentication request, and the service module initiates a license authentication request to the license control server-side through the license application agent module;
wherein, the license authentication request will carry information such as encoding information of the controlled object, a license function item, and an applied license consumption value etc.

In step five, the license authorization control module of the license control server-side determines whether the license authentication request is legal according to a dynamic sharing rule of the current license file and returns a corresponding license authentication result to the applicant.

In step six, the license application agent parses the returned license authentication result, and returns the license authentication result to the service module which initiates the request.

In step seven, the service module determines the result of the request, and if it is successful, the service module allows the user to perform the next operation, otherwise, prompts the user to apply for a correct license.

In order to make the purposes, technical schemes and advantages of the embodiments of the present document more clear and apparent, the embodiments of the present document will be described in detail in conjunction with accompanying drawings. It should be illustrated that without conflict, the embodiments in the application and the features in the embodiments can be combined with each other randomly.

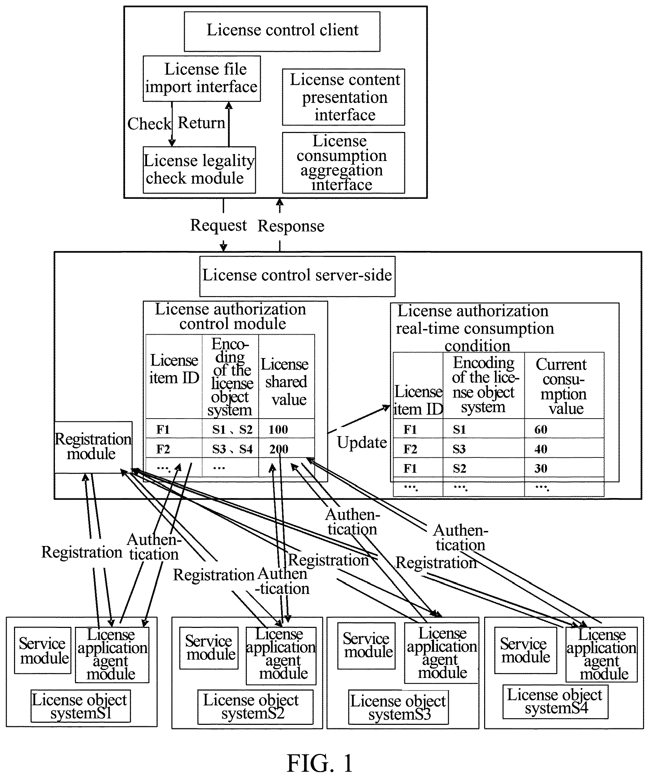

As shown in Fig. 1, the license control system according to the embodiment of the present document primarily comprises the following several logical constitutive parts:
a license control client, in which a license import interface is responsible for providing a license file import entrance; wherein a license legality check module is responsible for checking the legality of the license file; a license content presentation interface is responsible for presenting the content of the license file; and a license consumption aggregation interface is responsible for obtaining a license authorization real-time consumption condition from the license control server-side in real time;
a license control server-side, in which a registration module is responsible for verifying and registering the legality of the controlled objects which access the system; and a license authorization control module is configured to respond to the license authentication request of the controlled objects according to a dynamic sharing rule, and carry on statistics on the license consumption condition in real time and notify it to the license control client side;
a license object system, comprising a service module, and also comprising a license application agent module, wherein the license application agent module is deployed in the software of the controlled object, and is responsible for encrypting the license authentication request and transferring it to the license control server-side; receiving a license authentication result message of the license control server-side, and is responsible for decrypting the message and then distributing it to the corresponding service module.

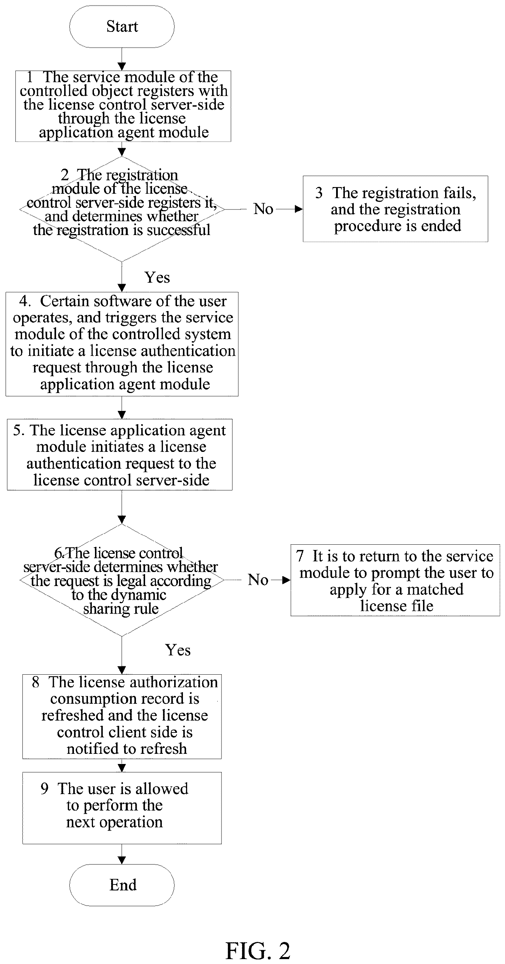

As shown in Fig. 2, the license control procedure according to the embodiment of the present document mainly comprises the following steps.

In step one, the service module of the controlled object registers with the license control server-side through the license application agent module.

In step two, the registration module of the license control server-side registers it, determines whether the registration is successful, and if it is successful, it is to perform step four; otherwise, it is to perform step three.

In step three, the registration fails, and the registration procedure is ended.

In step four, the registration is successful, and certain software of the user operates, and triggers the service module of the controlled system to initiate a license authentication request through the license application agent module.

In step five, the license application agent module initiates an authentication request to the license control server-side.

In step six, the license authorization control module of the license control server-side determines whether the request is legal according to the dynamic sharing rule of the current license file, and if it is legal, it is to perform step eight; otherwise, it is to perform step seven.

As shown in table one, in an example of the embodiment of the present document, the dynamic sharing rule configured by the license authorization control module mainly comprises the following information.

**Table one Dynamic sharing rule**

| Licensed function item | Encoding information of the license object system | Shared license value |
|---|---|---|
| Function 1 | SystemA, SystemB | 100 |

For example, the current SystemA and SystemB have consumed 30 and 40 license values respectively.

When the SystemA initiates the authentication request again to apply for 40 authorization values of Funciton1 (i.e., adding 10 authorization values based on the original ones), the license authorization control module determines whether the sum of the consumption value of SystemA and the currently recorded consumption values of SystemB exceeds the shared license value, and in this example, 40+40=80, which is less than the shared value 100, and therefore, it is determined that the request is legal, and a license authentication success message is returned, and the consumption record of SystemA is refreshed; otherwise, a license authentication failure message is returned.

In step seven, the authentication request is illegal, and the procedure is returned to the service module to prompt the user to apply for a matched license file.

In step eight, the authentication request is legal, and the license authorization consumption record is refreshed in real time and the license control client side is notified to refresh.

In step nine, the user is allowed to perform the next operation, and this procedure ends.

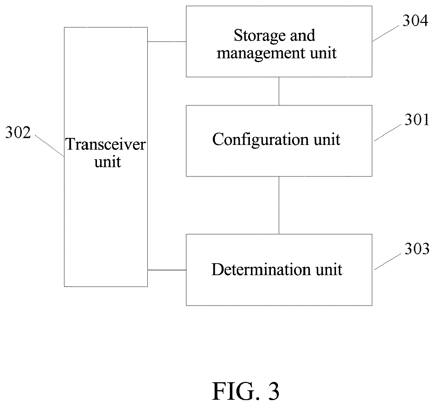

The present document further provides a license authorization control apparatus, as shown in Fig. 3, comprising a configuration unit 301, a transceiver unit 302 and a determination unit 303, wherein,
the configuration unit 301 is configured to configure a shared license value of a license sharing group, wherein, the license sharing group includes one or more license object systems;
the transceiver unit 302 is configured to receive a license authentication request initiated by the license object system and transmit it to the determination unit; and return a license authentication result transmitted from the determination unit to the license object system; and
the determination unit 303 is configured to determine whether the license authentication request of the license object system is legal according to the shared license value of the license sharing group where the license object system is located when receiving the license authentication request; and transmit the license authentication result to the transceiver unit.

Preferably, the above license authorization control apparatus further comprises a storage and management unit 304, configured to store and manage a shared license file configured by the license sharing group, wherein, the shared license file includes a configured dynamic sharing rule;
wherein, the configured dynamic sharing rule includes the following information: a license function item, encoding information of each license object system in the license sharing group, and a shared license value.

Preferably, in the above license authorization control apparatus, the storage and management unit 304 is further configured to store and update a license authorization real-time consumption record of the license sharing group according to the license consumption value applied by the license object system included in the license authentication request, wherein, the license authorization real-time consumption record includes the license consumption value of each license object system in the license sharing group.

Preferably, in the above license authorization control apparatus, the determination unit 303 is configured to determine whether the license authentication request of the license object systems is legal according to a dynamic sharing rule of the shared license file in accordance with the following mode when receiving the license authentication request: determining whether a sum of the license consumption value applied by the license object system included in the license authentication request and the recorded license consumption values of other license object systems in the license sharing group exceeds the shared license value of the license function item, if not exceeding, determining that the license authentication request is legal and returning a license authentication success result, and if exceeding, determining that the license authentication request is illegal, and returning a license authentication failure result.

The above description is only the preferred embodiments of the present document and it is not intended to limit the present document, the present document can also have a variety of other embodiments.

Obviously, those skilled in the art should understand that each module or each step of the aforementioned embodiments of the present document can be implemented with general computing apparatuses, and can be integrated in a single computing apparatus, or distributed over a network consisting of a plurality of computing apparatuses; alternatively, they can be implemented with program codes executable by the computing apparatuses, and therefore, they can be stored in storage apparatuses to be executed by the computing apparatuses; and in some cases, the steps illustrated or described here can be implemented in an order different from the one here, alternatively, they are respectively made into various integrated circuit modules; alternatively, it is to implement by making several modules or steps of them into a single integrated circuit module. Thus, the embodiments of the present document are not limited to any specific combinations of hardware and software.

### Industrial Applicability

The above technical scheme provides a license control method and system, which implement dynamic license sharing. The license control method and system divide the license object system into one or more sharing groups according to the service planning by formulating the sharing rule, and the license object systems in the same sharing group can share the license authorization value in the sharing group, thus implementing dynamic license sharing, and the license resources released by any license object system therein can be dynamically used by other license object systems, which avoids the waste of license resources; and as long as the license consumption value of the whole sharing group does not exceed the total limitation, there is no need to make a license file again, which reduces the operations when the license file is updated. Compared to the related art, with the present document, the dynamic sharing of multiple application systems is enabled, and there are characteristics of safety, high efficiency, and separation of license consumption from management, and the advantages are obvious especially in a telecommunication network management system.

## Claims

1. A license control method, comprising:
a license control system configuring a shared license value of a license sharing group, wherein, the license sharing group includes one or more license objects;
a license object initiating a license authentication request to the license control system according to a service operation initiated by a user; and
the license control system determining whether the license authentication request of the license object is legal according to the shared license value of the license sharing group where the license object is located, and returning a license authentication result to the license object;
**characterized in that** the method further comprises:
the license control system storing a shared license file configured for the license sharing group, wherein, the shared license file includes a configured dynamic sharing rule;
the configured dynamic sharing rule includes the following information: a license function item, encoding information of each license object in the license sharing group, and the shared license value of the license function item,
wherein the step of the license control system determining whether the license authentication request of the license object is legal according to the shared license value of the license sharing group where the license object is located comprises:
when receiving the license authentication request, the license control system determining whether a sum of a license consumption value of the license function item applied by the license object included in the license authentication request and recorded license consumption values of the license function item of other license objects in the license sharing group exceeds the shared license value of the license function item according to the dynamic sharing rule of the shared license file, if not exceeding, determining that the license authentication request is legal and returning a license authentication success result, and if exceeding, determining that the license authentication request is illegal, and returning a license authentication failure result.

2. The method according to claim 1, further comprising:
the license control system storing and updating a license authorization real-time consumption record of the license sharing group, wherein, the license authorization real-time consumption record includes the license consumption value of each license object in the license sharing group.

3. A license control system, comprising license objects and a license control server-side, wherein the license control server-side comprises a license authorization control module, wherein,
the license object is configured to initiate a license authentication request to the license authorization control module according to a service operation initiated by a user, and receive a license authentication result returned by the license authorization control module; and
the license authorization control module is configured to configure a shared license value of a license sharing group, wherein, the license sharing group includes one or more license objects; and when receiving a license authentication request initiated by the license object, determine whether the license authentication request of the license object is legal according to the shared license value of the license sharing group where the license object is located, and return a license authentication result to the license object;
**characterized in that**, the license authorization control module is configured to store and manage a shared license file configured by the license sharing group, wherein, the shared license file includes a configured dynamic sharing rule;
wherein, the configured dynamic sharing rule includes the following information: a license function item, encoding information of each license object in the license sharing group, and the shared license value of the license function item,
wherein, the license object further comprises a service module and a license application agent module,
the service module is configured to initiate a request to the license application agent module when a user initiates a service operation through the service module;
the license application agent module is configured to transmit the license authentication request to the license authorization control module according to the request of the service module, and include the applied license consumption value of the license function item in the license authentication request; and receive a license authentication result of the license authorization control module and distribute the license authentication result to a corresponding service module; and
the license authorization control module is configured to determine whether the license authentication request of the license object is legal according to a dynamic sharing rule of the shared license file in accordance with the following mode when receiving the license authentication request: determining whether a sum of the license consumption value of the license function item applied by the license object included in the license authentication request and the recorded license consumption values of the license function item of other license objects in the license sharing group exceeds the shared license value of the license function item, if not exceeding, determining that the license authentication request is legal and returning a license authentication success result, and if exceeding, determining that the license authentication request is illegal, and returning a license authentication failure result.

4. The system according to claim 3, wherein,
the license authorization control module is further configured to store and update a license authorization real-time consumption record of the license sharing group according to a license consumption value applied by the license object included in the license authentication request, wherein, the license authorization real-time consumption record includes the license consumption value of each license object in the license sharing group.

5. The system according to claim 3 or 4, further comprising a client communicating with the license control server-side, wherein, the client includes one or more of the following modules:
a license file import interface, configured to provide a shared license file import entrance;
a license legality check module, configured to check legality of the shared license file;
a license content presentation module, configured to obtain a content of the shared license file from the license control server-side and present the content; and
a license consumption aggregation interface, configured to obtain a license authorization real-time consumption condition from the license control server-side and present the license authorization real-time consumption condition.

6. A license authorization control apparatus, comprising a configuration unit (301), a transceiver unit (302) and a determination unit (303), wherein,
the configuration unit (301) is configured to configure a shared license value of a license sharing group, wherein, the license sharing group includes one or more license objects ;
the transceiver unit (302) is configured to receive a license authentication request initiated by the license object to transmit to the determination unit (303); and return a license authentication result transmitted from the determination unit (303) to the license object; and
the determination unit (303) is configured to determine whether the license authentication request of the license object is legal according to the shared license value of the license sharing group where the license object is located when receiving the license authentication request; and transmit the license authentication result to the transceiver unit (302);
**characterized in that**,
the license authorization control apparatus further comprises a storage and management unit (304), configured to store and manage a shared license file configured by the license sharing group, wherein, the shared license file includes a configured dynamic sharing rule;
wherein, the configured dynamic sharing rule includes the following information: a license function item, encoding information of each license object in the license sharing group, and the shared license value of the license function item,
wherein, the determination unit (303) is configured to determine whether the license authentication request of the license object is legal according to a dynamic sharing rule of the shared license file in accordance with the following mode when receiving the license authentication request: determining whether a sum of the license consumption value of the license function item applied by the license object included in the license authentication request and recorded license consumption values of the license function item of other license objects in the license sharing group exceeds the shared license value of the license function item, if exceeding, determining that the license authentication request is legal and returning a license authentication success result, and if exceeding, determining that the license authentication request is illegal, and returning a license authentication failure result.

7. The license authorization control apparatus according to claim 6, wherein, the storage and management unit (304) is further configured to store and update a license authorization real-time consumption record of the license sharing group according to a license consumption value applied by the license object included in the license authentication request, wherein, the license authorization real-time consumption record includes the license consumption value of each license object in the license sharing group.

## Patentansprüche

1. Lizenzsteuerverfahren, umfassend:
ein Lizenzsteuersystem, das einen geteilten Lizenzwert einer Lizenzteilungsgruppe konfiguriert, wobei die Lizenzteilungsgruppe ein oder mehrere Lizenzobjekte beinhaltet;
ein Lizenzobjekt, das eine Lizenzauthentifizierungsanfrage an das Lizenzsteuersystem gemäß eines Dienstbetriebs initiiert, der von einem Anwender initiiert wird; und
das Lizenzsteuersystem ermittelt, ob die Lizenzauthentifizierungsanfrage des Lizenzobjekts gemäß dem geteilten Lizenzwert der Lizenzteilungsgruppe, wo das Lizenzobjekt liegt, zulässig ist und ein Lizenzauthentifizierungsergebnis an das Lizenzobjekt zurücksendet;
**dadurch gekennzeichnet, dass** das Verfahren weiter umfasst, dass:
das Lizenzsteuersystem eine geteilte Lizenzdatei speichert, die für die Lizenzteilungsgruppe konfiguriert ist, wobei die geteilte Lizenzdatei eine konfigurierte dynamische Teilungsregel beinhaltet;
die konfigurierte dynamische Teilungsregel die folgenden Informationen beinhaltet: einen Lizenzfunktionsgegenstand, Codierungsinformationen jedes Lizenzobjekts in der Lizenzteilungsgruppe und den geteilten Lizenzwert des Lizenzfunktionsgegenstands,
wobei der Schritt, dass das Lizenzsteuersystem ermittelt, ob die Lizenzauthentifizierungsanfrage des Lizenzobjekts gemäß dem geteilten Lizenzwert der Lizenzteilungsgruppe, wo das Lizenzobjekt liegt, zulässig ist, umfasst:
wenn die Lizenzauthentifizierungsanfrage empfangen wird, das Lizenzsteuersystem ermittelt, ob eine Summe eines Lizenzverbrauchswerts des Lizenzfunktionsgegenstands, der durch das Lizenzobjekt angewendet wird, das in der Lizenzauthentifizierungsanfrage beinhaltet ist, und aufgezeichneter Lizenzverbrauchswerte des Lizenzfunktionsgegenstands anderer Lizenzobjekte in der Lizenzteilungsgruppe den geteilten Lizenzwert des Lizenzfunktionsgegenstands gemäß der dynamischen Teilungsregel der geteilten Lizenzdatei übersteigt, bei Nichtübersteigen ermittelt, dass die Lizenzauthentifizierungsanfrage zulässig ist, und ein Lizenzauthentifizierungserfolgsergebnis zurücksendet, und bei Übersteigen ermittelt, dass die Lizenzauthentifizierungsanfrage unzulässig ist, und ein Lizenzauthentifizierungsfehlerergebnis zurücksendet.

2. Verfahren nach Anspruch 1, weiter umfassend, dass:
das Lizenzsteuersystem eine Lizenzautorisierungsechtzeitverbrauchsaufzeichnung der Lizenzteilungsgruppe speichert und aktualisiert, wobei die Lizenzautorisierungsechtzeitverbrauchsaufzeichnung den Lizenzverbrauchswert jedes Lizenzobjekts in der Lizenzteilungsgruppe beinhaltet.

3. Lizenzsteuersystem, umfassend Lizenzobjekte und eine Lizenzsteuerserver-Seite, wobei die Lizenzsteuerserver-Seite ein Lizenzautorisierungssteuermodul umfasst, wobei
das Lizenzobjekt konfiguriert ist, eine Lizenzauthentifizierungsanfrage an das Lizenzautorisierungssteuermodul gemäß einem Dienstbetrieb zu initiieren, der von einem Anwender initiiert ist, und ein Lizenzauthentifizierungsergebnis zu empfangen, das von dem Lizenzautorisierungssteuermodul zurückgesendet ist; und
das Lizenzautorisierungssteuermodul konfiguriert ist, einen geteilten Lizenzwert einer Lizenzteilungsgruppe zu konfigurieren, wobei die Lizenzteilungsgruppe ein oder mehre Lizenzobjekte beinhaltet; und wenn eine Lizenzauthentifizierungsanfrage, die von dem Lizenzobjekt initiiert ist, empfangen wird, zu ermitteln, ob die Lizenzauthentifizierungsanfrage von dem Lizenzobjekt gemäß dem geteilten Lizenzwert der Lizenzteilungsgruppe, wo das Lizenzobjekt liegt, zulässig ist, und ein Lizenzauthentifizierungsergebnis an das Lizenzobjekt zurückzusenden;
**dadurch gekennzeichnet, dass** das Lizenzautorisierungssteuermodul konfiguriert ist, eine geteilte Lizenzdatei zu speichern und zu verwalten, die von der Lizenzteilungsgruppe konfiguriert ist, wobei die geteilte Lizenzdatei eine konfigurierte dynamische Teilungsregel beinhaltet;
wobei die konfigurierte dynamische Teilungsregel die folgenden Informationen beinhaltet: einen Lizenzfunktionsgegenstand, Codierungsinformationen jedes Lizenzobjekts in der Lizenzteilungsgruppe und den geteilten Lizenzwert des Lizenzfunktionsgegenstands,
wobei das Lizenzobjekt weiter ein Dienstmodul und ein Lizenzanwendungsmittlermodul umfasst,
das Dienstmodul konfiguriert ist, eine Anfrage an das Lizenzanwendungsmittlermodul zu initiieren, wenn ein Anwender einen Dienstbetrieb durch das Dienstmodul initiiert;
das Lizenzanwendungsmittlermodul konfiguriert ist, die Lizenzauthentifizierungsanfrage an das Lizenzautorisierungssteuermodul gemäß der Anfrage des Dienstmoduls zu übertragen und den angewendeten Lizenzverbrauchswert des Lizenzfunktionsgegenstands in der Lizenzauthentifizierungsanfrage zu beinhalten; und ein Lizenzauthentifizierungsergebnis des Lizenzautorisierungssteuermoduls zu empfangen und das Lizenzauthentifizierungsergebnis an ein entsprechendes Dienstmodul zu verteilen; und
das Lizenzautorisierungssteuermodul konfiguriert ist zu ermitteln, ob die Lizenzauthentifizierungsanfrage des Lizenzobjekts gemäß einer dynamischen Teilungsregel der geteilten Lizenzdatei in Übereinstimmung mit dem folgenden Modus zulässig ist, wenn die Lizenzauthentifizierungsanfrage empfangen wird: Ermitteln, ob eine Summe des Lizenzverbrauchswerts des Lizenzfunktionsgegenstands, der durch das Lizenzobjekt angewendet ist, das in der Lizenzauthentifizierungsanfrage beinhaltet ist, und der aufgezeichneten Lizenzverbrauchswerte des Lizenzfunktionsgegenstands anderer Lizenzobjekte in der Lizenzteilungsgruppe den geteilten Lizenzwert des Lizenzfunktionsgegenstands übersteigt, bei Nichtübersteigen Ermitteln, dass die Lizenzauthentifizierungsanfrage zulässig ist und Zurücksenden eines Lizenzauthentifizierungserfolgsergebnisses, und bei Übersteigen Ermitteln, dass die Lizenzauthentifizierungsanfrage unzulässig ist und Zurücksenden eines Lizenzauthentifizierungsfehlerergebnisses.

4. System nach Anspruch 3, wobei
das Lizenzautorisierungssteuermodul weiter konfiguriert ist, eine Lizenzautorisierungsechtzeitverbrauchsaufzeichnung der Lizenzteilungsgruppe gemäß eines Lizenzverbrauchswerts zu speichern und zu aktualisieren, der von dem Lizenzobjekt angewendet ist, das in der Lizenzautorisierungsanfrage beinhaltet ist, wobei die Lizenzautorisierungsechtzeitverbrauchsaufzeichnung den Lizenzverbrauchswert jedes Lizenzobjekts in der Lizenzteilungsgruppe beinhaltet.

5. System nach Anspruch 3 oder 4, weiter umfassend einen Client, der mit der Lizenzsteuerserver-Seite kommuniziert, wobei der Client eines oder mehrere der folgenden Module beinhaltet:
eine Lizenzdateiimportschnittstelle, die konfiguriert ist, einen geteilten Lizenzdateiimporteingang bereitzustellen;
ein Lizenzzulässigkeitsprüfmodul, das konfiguriert ist, Zulässigkeit der geteilten Lizenzdatei zu prüfen;
ein Lizenzinhaltdarstellungsmodul, das konfiguriert ist, einen Inhalt der geteilten Lizenzdatei von der Lizenzsteuerserver-Seite zu erhalten und den Inhalt darzustellen; und
eine Lizenzverbrauchsansammlungsschnittstelle, die konfiguriert ist, einen Lizenzautorisierungsechtzeitverbrauchszustand von der Lizenzsteuerserver-Seite zu erhalten und den Lizenzautorisierungsechtzeitverbrauchszustand darzustellen.

6. Lizenzautorisierungssteuereinrichtung, umfassend eine Konfigurationseinheit (301), eine Sendeempfängereinheit (302) und eine Ermittlungseinheit (303), wobei
die Konfigurationseinheit (301) konfiguriert ist, einen geteilten Lizenzwert einer Lizenzteilungsgruppe zu konfigurieren, wobei die Lizenzteilungsgruppe ein oder mehrere Lizenzobjekte beinhaltet;
die Sendeempfängereinheit (302) konfiguriert ist, eine Lizenzauthentifizierungsanfrage zu empfangen, die von dem Lizenzobjekt initiiert ist, um an die Ermittlungseinheit (303) zu übertragen; und ein Lizenzauthentifizierungsergebnis, das von der Ermittlungseinheit (303) übertragen ist, an das Lizenzobjekt zurückzusenden; und
die Ermittlungseinheit (303) konfiguriert ist zu ermitteln, ob die Lizenzauthentifizierungsanfrage des Lizenzobjekts gemäß dem geteilten Lizenzwert der Lizenzteilungsgruppe, wo das Lizenzobjekt liegt, zulässig ist, wenn die Lizenzauthentifizierungsanfrage empfangen wird; und das Lizenzauthentifizierungsergebnis an die Sendeempfängereinheit (302) zu übertragen;
**dadurch gekennzeichnet, dass**
die Lizenzautorisierungssteuereinrichtung weiter eine Speicher- und Verwaltungseinheit (304) umfasst, die konfiguriert ist, eine geteilte Lizenzdatei zu speichern und zu verwalten, die von der Lizenzteilungsgruppe konfiguriert ist, wobei die geteilte Lizenzdatei eine konfigurierte dynamische Teilungsregel beinhaltet;
wobei die konfigurierte dynamische Teilungsregel die folgenden Informationen beinhaltet: einen Lizenzfunktionsgegenstand, Codierungsinformationen jedes Lizenzobjekts in der Lizenzteilungsgruppe und den geteilten Lizenzwert des Lizenzfunktionsgegenstands,
wobei die Ermittlungseinheit (303) konfiguriert ist zu ermitteln, ob die Lizenzauthentifizierungsanfrage des Lizenzobjekts gemäß einer dynamischen Teilungsregel der geteilten Lizenzdatei in Übereinstimmung mit dem folgenden Modus zulässig ist, wenn die Lizenzauthentifizierungsanfrage empfangen wird: Ermitteln, ob eine Summe des Lizenzverbrauchswerts des Lizenzfunktionsgegenstands, der durch das Lizenzobjekt angewendet ist, das in der Lizenzauthentifizierungsanfrage beinhaltet ist, und aufgezeichneter Lizenzverbrauchswerte des Lizenzfunktionsgegenstands anderer Lizenzobjekte in der Lizenzteilungsgruppe den geteilten Lizenzwert des Lizenzfunktionsgegenstands übersteigt, bei Übersteigen Ermitteln, dass die Lizenzauthentifizierungsanfrage zulässig ist, und ein Lizenzauthentifizierungserfolgsergebnis zurückzusenden, und bei Übersteigen Ermitteln, dass die Lizenzauthentifizierungsanfrage unzulässig ist, und ein Lizenzauthentifizierungsfehlerergebnis zurückzusenden.

7. Lizenzautorisierungssteuereinrichtung nach Anspruch 6, wobei die Speicher- und Verwaltungseinheit (304) weiter konfiguriert ist, eine Lizenzautorisierungsechtzeitverbrauchsaufzeichnung der Lizenzteilungsgruppe gemäß einem Lizenzverbrauchswert zu speichern und zu aktualisieren, der durch das Lizenzobjekt angewendet wird, das in der Lizenzauthentifizierungsanfrage beinhaltet ist, wobei die Lizenzautorisierungsechtzeitverbrauchsaufzeichnung den Lizenzverbrauchswert jedes Lizenzobjekts in der Lizenzteilungsgruppe beinhaltet.

## Revendications

1. Procédé de contrôle de licence comprenant :
la configuration par un système de contrôle de licence d'une valeur de licence partagée d'un groupe de partage de licence, dans lequel le groupe de partage de licence inclut un ou plusieurs objets de licence ;
le lancement par un objet de licence d'une demande d'authentification de licence au système de contrôle de licence en fonction d'une opération de service lancée par un utilisateur ; et
la détermination par le système de contrôle de licence si la demande d'authentification de licence de l'objet de licence est légale en fonction de la valeur de licence partagée du groupe de partage de licence où l'objet de licence est situé, et le renvoi d'un résultat d'authentification de licence à l'objet de licence ;
**caractérisé en ce que** le procédé comprend en outre :
le stockage par le système de contrôle de licence d'un fichier de licence partagée configuré pour le groupe de partage de licence, dans lequel le fichier de licence partagée inclut une règle de partage dynamique configurée ;
la règle de partage dynamique configurée inclut les informations suivantes : un élément de fonction de licence, des informations de codage de chaque objet de licence dans le groupe de partage de licence et la valeur de licence partagée de l'élément de fonction de licence,
dans lequel l'étape de détermination par le système de contrôle de licence si la demande d'authentification de licence de l'objet de licence est légale en fonction de la valeur de licence partagée du groupe de partage de licence où l'objet de licence est situé comprend :
lors de la réception de la demande d'authentification de licence, la détermination par le système de contrôle de licence si une somme d'une valeur de consommation de licence de l'élément de fonction de licence appliqué par l'objet de licence inclus dans la demande d'authentification de licence et de valeurs de consommation de licence enregistrées de l'élément de fonction de licence d'autres objets de licence dans le groupe de partage de licence dépasse la valeur de licence partagée de l'élément de fonction de licence en fonction de la règle de partage dynamique du fichier de licence partagée, si elle ne dépasse pas, la détermination que la demande d'authentification de licence est légale et le renvoi d'un résultat de succès d'authentification de licence, et si elle dépasse, la détermination que la demande d'authentification de licence est illégale et le renvoi d'un résultat d'échec d'authentification de licence.

2. Procédé selon la revendication 1, comprenant en outre :
le stockage et la mise à jour par le système de contrôle de licence d'un enregistrement de consommation en temps réel d'autorisation de licence du groupe de partage de licence, dans lequel l'enregistrement de consommation en temps réel d'autorisation de licence inclut la valeur de consommation de licence de chaque objet de licence dans le groupe de partage de licence.

3. Système de contrôle de licence comprenant des objets de licence et un côté serveur de contrôle de licence, dans lequel le côté serveur de contrôle de licence comprend un module de contrôle d'autorisation de licence, dans lequel
l'objet de licence est configuré pour lancer une demande d'authentification de licence au module de contrôle d'autorisation de licence en fonction d'une opération de service lancée par un utilisateur et recevoir un résultat d'authentification de licence renvoyé par le module de contrôle d'autorisation de licence ; et
le module de contrôle d'autorisation de licence est configuré pour configurer une valeur de licence partagée d'un groupe de partage de licence, dans lequel le groupe de partage de licence inclut un ou plusieurs objets de licence ; et, lors de la réception d'une demande d'authentification de licence lancée par l'objet de licence, déterminer si la demande d'authentification de licence de l'objet de licence est légale en fonction de la valeur de licence partagée du groupe de partage de licence où l'objet de licence est situé, et renvoyer un résultat d"authentification de licence à l'objet de licence ;
**caractérisé en ce que** le module de contrôle d'autorisation de licence est configuré pour stocker et gérer un fichier de licence partagée configuré par le groupe de partage de licence, dans lequel le fichier de licence partagée inclut une règle de partage dynamique configurée ;
dans lequel la règle de partage dynamique configurée inclut les informations suivantes : un élément de fonction de licence, des informations de codage de chaque objet de licence dans le groupe de partage de licence et la valeur de licence partagée de l'élément de fonction de licence,
dans lequel l'objet de licence comprend en outre un module de service et un module d'agent d'application de licence,
le module de service est configuré pour lancer une demande au module d'agent d'application de licence quand un utilisateur lance une opération de service par le biais du module de service ;
le module d'agent d'application de licence est configuré pour transmettre la demande d'authentification de licence au module de contrôle d'autorisation de licence en fonction de la demande du module de service et inclure la valeur de consommation de licence appliquée de l'élément de fonction de licence dans la demande d'authentification de licence ; et recevoir un résultat d'authentification de licence du module de contrôle d'autorisation de licence et distribuer le résultat d'authentification de licence à un module de service correspondant ; et
le module de contrôle d'autorisation de licence est configuré pour déterminer si la demande d'authentification de licence de l'objet de licence est légale en fonction d'une règle de partage dynamique du fichier de licence partagée conformément au mode suivant lors de la réception de la demande d'authentification de licence : la détermination si une somme de la valeur de consommation de licence de l'élément de fonction de licence appliqué par l'objet de licence inclus dans la demande d'authentification de licence et des valeurs de consommation de licence enregistrées de l'élément de fonction de licence d'autres objets de licence dans le groupe de partage de licence dépasse la valeur de licence partagée de l'élément de fonction de licence, si elle ne dépasse pas, la détermination que la demande d'authentification de licence est légale et le renvoi d'un résultat de succès d'authentification de licence, et si elle dépasse, la détermination que la demande d'authentification de licence est illégale et le renvoi d'un résultat d'échec d'authentification de licence.

4. Système selon la revendication 3, dans lequel
le module de contrôle d'autorisation de licence est configuré en outre pour stocker et mettre à jour un enregistrement de consommation en temps réel d'autorisation de licence du groupe de partage de licence en fonction d'une valeur de consommation de licence appliquée par l'objet de licence inclus dans la demande d'authentification de licence, dans lequel l'enregistrement de consommation en temps réel d'autorisation de licence inclut la valeur de consommation de licence de chaque objet de licence dans le groupe de partage de licence.

5. Système selon la revendication 3 ou 4, comprenant en outre un client communiquant avec le côté serveur de contrôle de licence, dans lequel le client inclut un ou plusieurs des modules suivants :
une interface d'importation de fichier de licence configurée pour fournir une entrée d'importation de fichier de licence partagée ;
un module de vérification de légalité de licence configuré pour vérifier la légalité du fichier de licence partagée ;
un module de présentation de contenu de licence configuré pour obtenir un contenu du fichier de licence partagée à partir du côté serveur de contrôle de licence et présenter le contenu ; et
une interface d'agrégation de consommation de licence configurée pour obtenir une condition de consommation en temps réel d'autorisation de licence à partir du côté serveur de contrôle de licence et présenter la condition de consommation en temps réel d'autorisation de licence.

6. Appareil de contrôle d'autorisation de licence comprenant une unité de configuration (301), une unité d'émetteur-récepteur (302) et une unité de détermination (303), dans lequel
l'unité de configuration (301) est configurée pour configurer une valeur de licence partagée d'un groupe de partage de licence, dans lequel le groupe de partage de licence inclut un ou plusieurs objets de licence ;
l'unité d'émetteur-récepteur (302) est configurée pour recevoir une demande d'authentification de licence lancée par l'objet de licence pour transmettre à l'unité de détermination (303) ; et renvoyer un résultat d'authentification de licence transmis à partir de l'unité de détermination (303) à l'objet de licence ; et
l'unité de détermination (303) est configurée pour déterminer si la demande d'authentification de licence de l'objet de licence est légale en fonction de la valeur de licence partagée du groupe de partage de licence où l'objet de licence est situé lors de la réception de la demande d'authentification de licence ; et transmettre le résultat d'authentification de licence à l'unité d'émetteur-récepteur (302) ;
**caractérisé en ce que**
l'appareil de contrôle d'autorisation de licence comprend en outre une unité de stockage et de gestion (304) configurée pour stocker et gérer un fichier de licence partagée configuré par le groupe de partage de licence, dans lequel le fichier de licence partagée inclut une règle de partage dynamique configurée ;
dans lequel la règle de partage dynamique configurée inclut les informations suivantes : un élément de fonction de licence, des informations de codage de chaque objet de licence dans le groupe de partage de licence et la valeur de licence partagée de l'élément de fonction de licence,
dans lequel l'unité de détermination (303) est configurée pour déterminer si la demande d'authentification de licence de l'objet de licence est légale en fonction d'une règle de partage dynamique du fichier de licence partagée conformément au mode suivant lors de la réception de la demande d'authentification de licence : la détermination si une somme de la valeur de consommation de licence de l'élément de fonction de licence appliqué par l'objet de licence inclus dans la demande d'authentification de licence et de valeurs de consommation de licence enregistrées de l'élément de fonction de licence d'autres objets de licence dans le groupe de partage de licence dépasse la valeur de licence partagée de l'élément de fonction de licence, si elle dépasse, la détermination que la demande d'authentification de licence est légale et le renvoi d'un résultat de succès d'authentification de licence, et si elle dépasse, la détermination que la demande d'authentification de licence est illégale et le renvoi d'un résultat d'échec d'authentification de licence.

7. Appareil de contrôle d'autorisation de licence selon la revendication 6, dans lequel l'unité de stockage et de gestion (304) est configurée en outre pour stocker et mettre à jour un enregistrement de consommation en temps réel d'autorisation de licence du groupe de partage de licence en fonction d'une valeur de consommation de licence appliquée par l'objet de licence inclus dans la demande d'authentification de licence, dans lequel l'enregistrement de consommation en temps réel d'autorisation de licence inclut la valeur de consommation de licence de chaque objet de licence dans le groupe de partage de licence.
